# EUROPEAN PATENT APPLICATION

(11) **EP 2 495 696 A1**
(43) Date of publication of application: **05.09.2012**
(21) Application number: 10826605.7
(22) Date of filing: 21.10.2010
(51) Int. Cl.: G06Q 50/00, G06Q 10/00, G09B 29/00

(54) **MANAGEMENT SERVER, POPULATION INFORMATION CALCULATION MANAGEMENT SERVER, ZERO POPULATION DISTRIBUTION AREA MANAGEMENT METHOD, AND POPULATION INFORMATION CALCULATION METHOD**

(30) Priority: 30.10.2009 JP 2009251056
(71) Applicant: NTT DOCOMO, INC., Chiyoda-ku Tokyo 100-6150 (JP)
(72) Inventor: OYABU Yuki, Tokyo 100-6150 (JP); OKAJIMA Ichiro, Tokyo 100-6150 (JP); NAGATA Tomohiro, Tokyo 100-6150 (JP)
(74) Representative: Viering, Jentschura & Partner
(86) International application number: PCT/JP2010/068588
(87) International publication number: WO 2011/052473

(57) **Abstract**

To provide a management server, population information calculation management server, non-populated area management method, and population information calculation method capable of easily specifying a depopulated area and calculating accurate population information, a GPS information collection unit (519) collects location information of mobile equipments (100) and stores them into a GPS information accumulation unit (514). Then, a depopulated area specifying unit (516) specifies a non-populated area in a given area (for example, an area (sector influence diagram) designated by an operator) using the location information accumulated in the GPS information accumulation unit (514). The population distribution can be thereby accurately calculated using the non-populated area. For example, there can be a case where the population distribution in a given area is not uniform within the area. In such a case, it is possible to know in which part the population is unevenly distributed using the mobile equipment non-populated area.

## Description

### Technical Field

The present invention relates to a management server that collects location information of mobile terminals, a population information calculation management server, a non-populated area management method, and a population information calculation method.

### Background Art

Analysis of population distribution related to a plurality of users who carry portable terminals is under consideration, and an analysis process on the basis of a user attribute, which is the process of acquiring location information of portable terminals and analyzing the population distribution of users in a predetermined region based on the location information, is disclosed in Patent Literature 1 (Japanese Unexamined Patent Application Publication No. 2003-30373) below.

### Citation List

### Patent Literature

PTL 1: Japanese Unexamined Patent Application Publication No. 2003-30373

### Summary of Invention

### Technical Problem

However, the analysis of population distribution disclosed in the above Patent Literature 1 is to obtain the population distribution in a predetermined region, and no consideration is placed on a depopulated area within the region. Specifically, a residential area that is heavily populated, a forest area that is scarcely populated and the like exist in a given region, and the density of population varies within the same region.

Thus, because the population distribution in a region to be analyzed is uniformly obtained in the technique disclosed in the above Patent Literature 1, there is a problem that the accurate population distribution is not obtainable.

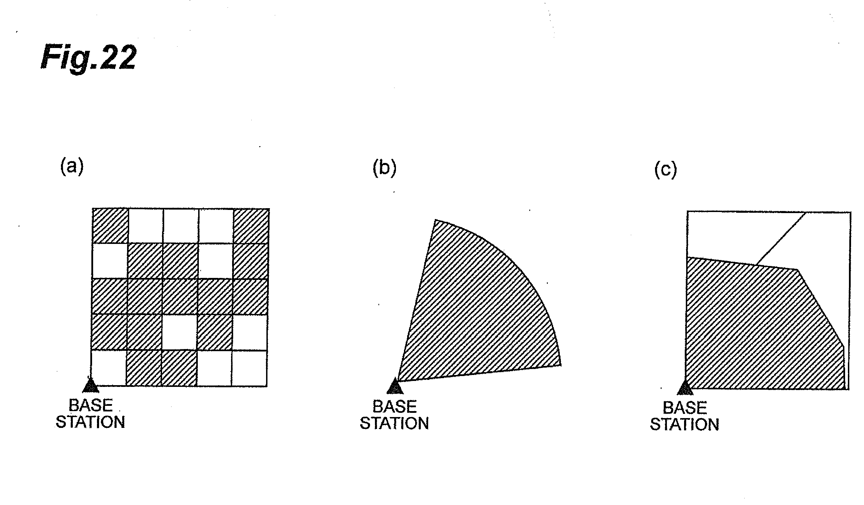

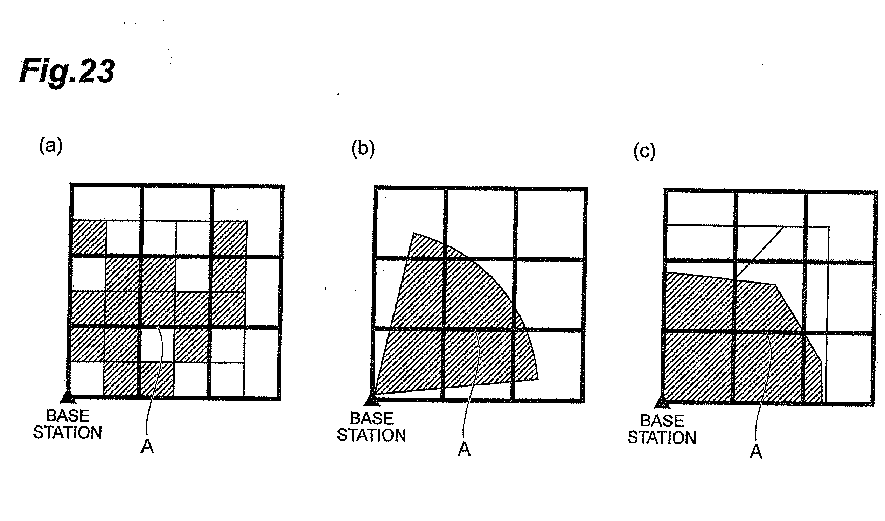

This point is further described with reference to the drawings. When calculating the population distribution using the radio range (sector area of influence) of a base station sector, the ranges shown in Figs. 22(a) to 22(c) are considered as the area of influence (the unit of population distribution). Fig. 22(a) shows the case of using a method on the basis of actual measurement, in which a predetermined rectangular range is used as the sector area of influence according to actual radio conditions. Fig. 22(b) shows a result of deriving the area of influence using antenna installation information or the like. Further, Fig. 23(c) shows the case in which a Voronoi region generated on the basis of the sector center position is used as the area of influence. In any of the areas of influence, the range where a population exists is indicated by hatching, and the other part is left blank. In any of Figs. 22(a) to 22(c), a predetermined area of influence is used as the unit of calculation of population distribution.

However, when the population distribution is not uniform within the area of influence, population information cannot be calculated correctly in some cases. For example, there is a case where a given region is partitioned by a mesh region of a predetermined range as shown in Figs. 23(a) to (c), and population information is calculated on the mesh region basis. In this case, on the assumption that the population is uniformly distributed over the area of influence shown in Figs. 22(a) to (c), the population information is calculated using the area ratio.

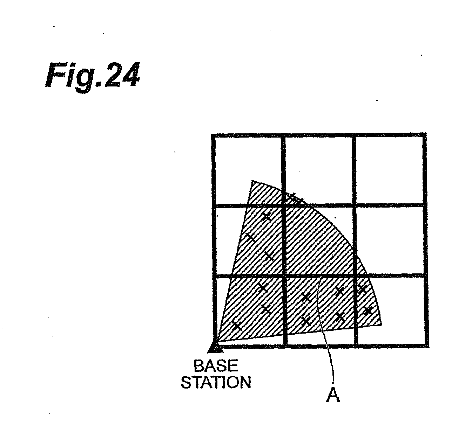

However, the population is not necessarily uniformly distributed over the area of influence. For example, as shown in Fig. 24, when a region indicated as the region A is a mountainous area or has a lake, for example, no people can exist there and it is a blank area. Thus, when the population information is calculated using the area ratio as described in the above method, incorrect population information is obtained.

To solve the above-described problem, an object of the present invention is thus to provide a management server, a population information calculation management server, a non-populated area management method, and a population information calculation method that can easily specify a depopulated area and calculate accurate population information.

### Solution to Problem

To solve the above problem, a management server according to the present invention includes a collection means for collecting location information of mobile equipments, and a non-populated area specifying means for specifying a non-populated area in a given area according to the location information collected by the collection means.

Further, a non-populated area management method according to the present invention includes a collection step of collecting location information of mobile equipments, and a non-populated area specifying step of specifying a non-populated area in a given area according to the location information collected in the collection step.

According to the invention, the location information of mobile equipments are collected, and a non-populated area in a given area is specified according to the collected location information, thereby accurately calculating population distribution using the non-populated area. For example, there can be a case where population distribution in a given area is not uniform within the area. In such a case, it is possible to know in which part the population is unevenly distributed using the non-populated area. Thus, when it is desired to know the population information in an area that is further partitioned in a given area, it is possible to calculate the accurate population information using the non-populated area.

Further, it is preferred that the management server according to the present invention further includes an area storage means for storing area information indicating areas formed by predetermined boundaries and locations of the areas, and the non-populated area specifying means specifies the non-populated area by forming a populated area with a given radius around the location information collected by the collection means and removing the populated area from the area indicated by the area information stored in the area storage means.

According to the invention, the area information indicating areas formed by predetermined boundaries and locations of the areas are stored, a populated area with a given radius around the collected location information is formed, the populated area is removed from the area indicated by the stored area information, and the non-populated area can be thereby specified. It is thereby possible to calculate accurate population information in a given area, using the non-populated area.

Further, it is preferred that the management server according to the present invention further includes an attribute information storage means for storing attribute information of each of mobile equipments, the collection means collects the location information of mobile equipments and further collects the attribute information of the mobile equipments, and the non-populated area specifying means sorts out mobile equipments having given attribute information based on the attribute information collected by the collection means and the attribute information stored in the attribute information storage means and specifies the non-populated area in the given area according to the location information of the sorted-out mobile equipments.

According to the invention, the attribute information of each of mobile equipments are prestored, the location information of mobile equipments are collected and further the attribute information of the mobile equipments are collected, mobile equipments having given attribute information are sorted out based on the collected attribute information and the prestored attribute information, and the non-populated area in the given area can be specified using to the location information of the sorted-out mobile equipments. It is thereby possible to specify the non-populated area with the attribute information taken into account and thereby achieve the calculation of population information in consideration of the attribute information. This is effective when it is desired to know the population distribution of males only, for example.

Further, it is preferred that the management server according to the present invention further includes a travel mode determination means for determining travel mode of mobile equipments based on the location information of the mobile equipments collected by the collection means, and the non-populated area specifying means specifies the non-populated area in the given area according to the travel mode determined by the travel mode determination means and the location information of each of the mobile equipments collected by the collection means.

According to the invention, the travel mode of mobile equipments is determined based on the collected location information of the mobile equipments, and the non-populated area in the given area can be specified according to the determined travel mode and the collected location information of each of the mobile equipments. It is thereby possible to specify the non-populated area according to the travel mode, which can be used for the calculation of more accurate population information.

A population information calculation management server according to the present invention includes an area storage means for storing area information indicating areas formed by predetermined boundaries and locations of the areas, a population information storage means for storing population information indicating a population located in an area for each of the areas, a populated area specifying means for removing the non-populated area specified in the management server according to any one of Claims 1 to 4 from the area stored in the area storage means and specifying a populated area where a population exists, and a population information calculation means for calculating a population of the populated area or a partial area in the populated area based on the populated area specified by the populated area specifying means and the population information for each of the areas stored in the population information storage means.

For example, the population information storage means according to the present invention preferably stores the population information collected for each of sectors defined as the areas with respect to each of the sectors.

A population information calculation method according to the present invention is a population information calculation method in a management server including an area storage means for storing area information indicating areas formed by predetermined boundaries and locations of the areas, and a population information storage means for storing population information indicating a population located in an area for each of the areas, which includes a populated area specifying step of removing the non-populated area specified in the management server according to any one of Claims 1 to 4 from the area stored in the area storage means and specifying a populated area where a population exists, and a population information calculation step of calculating a population of the populated area or a partial area in the populated area based on the populated area specified in the populated area specifying step and the population information for each of the areas stored in the population information storage means.

According to the invention, the area information indicating areas formed by predetermined boundaries and locations of the areas are stored, and the population information indicating a population located in an area are also stored for each of the areas (for example, sector influence diagrams). Then, the non-populated area is removed from the prestored area, a populated area where a population exists is specified, and a population of the populated area or a partial area in the populated area can be calculated based on the specified populated area and the stored population information for each of the areas. It is thereby possible to calculate the accurate population information. Although the presence or absence of a mobile equipment has not been recognizable by the non-populated area, the populated area or the like in a given area, the non-populated area and the populated area are recognizable in this invention, and it is thus possible to calculate the accurate population information when calculating the population information in a mesh region further divided from a given area.

### Advantageous Effects of Invention

According to the present invention, it is possible to accurately calculate population distribution using the non-populated area. For example, there can be a case where population distribution in a given area is not uniform within the area. In such a case, it is possible to know in which part the population is unevenly distributed using the non-populated area. Thus, when it is desired to know the population information in an area that is further partitioned in a given area, it is possible to calculate the accurate population information using the non-populated area.

### Brief Description of Drawings

Fig. 1 is a system configuration diagram of a communication system 10 according to an embodiment.
Fig. 2 is a block diagram showing functions of a management server 503a placed in a mobile demography unit 503.
Fig. 3 is a hardware configuration diagram of the management server 503a.
Fig. 4 is an explanatory diagram of a customer information management table containing customer information.
Fig. 5 is an explanatory diagram of a GPS information management table containing GPS information.
Fig. 6 is an explanatory diagram of an intermediate table composed of a customer information management table and a GPS information management table.
Fig. 7 is an explanatory diagram of a depopulated area information management table.
Fig. 8 is an explanatory diagram showing that each area is formed by a sector influence diagram of each base station.
Fig. 9 is an explanatory diagram showing a state where generated buffer regions and sector influence diagrams are superimposed on a map.
Fig. 10 is an explanatory diagram showing a sector influence diagram x which is a part that cannot be covered with a populated area.
Fig. 11 is a flowchart showing an operation of the management server 503a.
Fig. 12 is a block diagram showing functions of a management server 503b capable of specifying a non-populated area based on traffic mode.
Fig. 13 is an explanatory diagram showing a specific example of a location information data table 514a.
Fig. 14 is an explanatory diagram showing a specific example of a point data table 520a.
Fig. 15 is an explanatory diagram showing a specific example of a line data table 520b.
Fig. 16 is a flowchart showing an operation of a management server 503b according to an alternative example.
Fig. 17 is a block diagram showing functions of a management server 503c for calculating population distribution.
Fig. 18 is an explanatory diagram showing a specific example of partitioned region population information stored in a partitioned region population information storage unit 522.
Fig. 19 is an explanatory diagram showing partitioned sector influence diagrams extracted based on depopulated area information.
Fig. 20 is an explanatory diagram showing partition using a plurality of mesh regions.
Fig. 21 is a flowchart showing a process of a management server 503c for calculating population information of a given area using depopulated area information.
Fig. 22 is an explanatory diagram showing examples of an area (sector area of influence) serving as the unit of population distribution calculation.
Fig. 23 is an explanatory diagram showing examples of partition of an area serving as the unit of population distribution calculation by a mesh region.
Fig. 24 is an explanatory diagram showing examples of a mesh region including a blank area.

### Description of Embodiments

Embodiments of the present invention will be described with reference to the appended drawings. The same elements will be denoted by the same reference symbols, and the redundant description thereof will be omitted where possible.

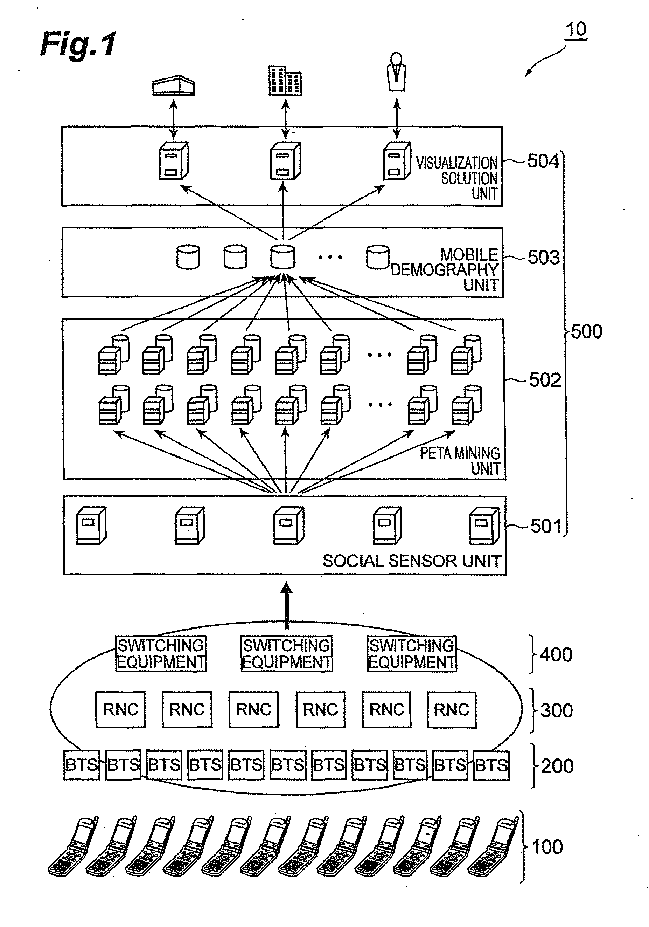

Fig. 1 is a system configuration diagram of a communication system 10 according to the embodiment. As shown in Fig. 1, the communication system 10 includes a mobile equipment 100, a BTS (Base Transceiver Station) 200, an RNC (Radio Network Controller) 300, a switching equipment 400, and a control center 500. Further, the control center 500 includes a social sensor unit 501, a peta mining unit 502, a mobile demography unit 503, and a visualization solution unit 504.

The switching equipment 400 collects location information of the mobile equipment 100 through the BTS 200 and the RNC 300. The RNC 300 can measure the location of the mobile equipment 100 when a specific communication is performed with the mobile equipment 100. The switching equipment 400 can receive the measured location information of the mobile equipment 100, sector information indicating the sector to which the mobile equipment 100 belongs and the like when the mobile equipment 100 executes a specific communication. The switching equipment 400 stores the received location information and sector information, and outputs the collected location information and sector information to the control center 500 at predetermined timing or in response to a request from the control center 500.

The control center 500 includes the social sensor unit 501, the peta mining unit 502, the mobile demography unit 503, and the visualization solution unit 504 as described above, and each unit performs statistical processing using the location information and sector information of the mobile equipment 100.

The social sensor unit 501 is a server device that collects data including the location information of the mobile equipment 100 and the like from each switching equipment 400. The social sensor unit 501 is configured to be able to receive data output from the switching equipment 400 at regular intervals or acquire data from the switching equipment 400 according to the timing predetermined in the social sensor unit 501.

The peta mining unit 502 is a server device that converts the data received from the social sensor unit 501 into a predetermined data format. For example, the peta mining unit 502 performs sorting using the user ID as a key or sorting by area.

The mobile demography unit 503 is a server device that performs aggregation processing of the data processed in the peta mining unit 502, which is, counting of each item. For example, the mobile demography unit 503 can count the number of users located in a certain area or perform aggregation of the area distribution.

The visualization solution unit 504 is a server device that processes the data aggregated in the mobile demography unit 503 into visible. For example, the visualization solution unit 504 can map the aggregated data onto a map. Note that the statistically processed information is processed so as not to identify persons or the like to avoid invasion of privacy as a matter of course.

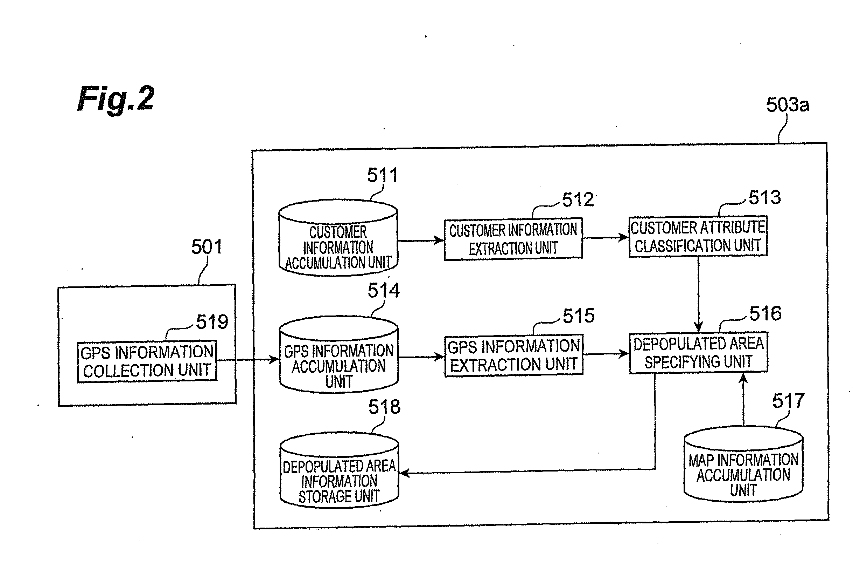

Fig. 2 is a block diagram showing functions of a management server 503a that is placed in the mobile demography unit 503 in the communication system 10 according to the embodiment. The management server 503a includes a customer information accumulation unit 511 (attribute information storage means), a customer information extraction unit 512, a customer attribute classification unit 513, a GPS information accumulation unit 514, a GPS information extraction unit 515, a depopulated area specifying unit 516 (non-populated area specifying means), a map information accumulation unit 517 (area storage means), and a depopulated area information storage unit 518. The management server 503a is a computer system composed of a CPU, ROM, RAM and the like, and the CPU operates according to the program stored in the ROM, thereby executing the above-described functions.

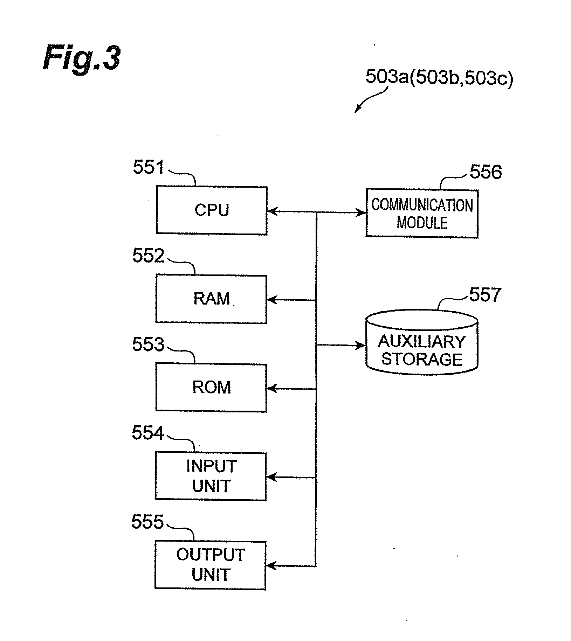

Fig. 3 is a hardware configuration diagram of the management server 503a. The management server 503b shown in Fig. 2 is physically configured as a computer system including a CPU 551, RAM 552 and ROM 553 serving as a main storage, an input unit 554 such as a keyboard and a mouse serving as an input device, an output unit 555 such as a display, a communication module 556 serving as a data transmitting and receiving device such as a network card, an auxiliary storage 557 such as a hard disk and the like as shown in Fig. 3. The functions illustrated in Fig. 2 are implemented by loading given computer software onto hardware such as the CPU 551 or the RAM 552 shown in Fig. 3, making the input unit 554, the output unit 555 and the communication module 556 operate under control of the CPU 551, and performing reading and writing of data in the RAM 552 or the auxiliary storage 557. Each functional block is described hereinafter based on the functional blocks shown in Fig. 2.

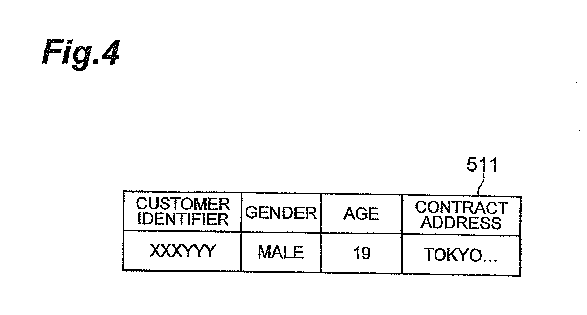

The customer information accumulation unit 511 is a part that accumulates customer information of users of the mobile equipments 100. Fig. 4 is an explanatory diagram of a customer information management table containing the customer information. As shown in Fig. 4, the customer information composed of customer identifier, gender and age, which are attribute information, contract address and the like are accumulated. The customer identifier is an identifier for uniquely identifying a user of the mobile equipment 100, and it may be a telephone number, a subscriber identifier or a terminal identifier of the mobile equipment 100, for example. The information contained in the customer information management table is created by a carrier in advance.

The customer information extraction unit 512 is a part that extracts the customer information accumulated in the customer information accumulation unit 511. Specifically, when an operation for specifying a depopulated area is performed by an operator of the management server 503a, the customer information extraction unit 512 extracts the customer information from the customer information accumulation unit 511 and outputs the extracted customer information to the customer attribute classification unit 513.

The customer attribute classification unit 513 is a part that, when attribute information is designated by an operator in the operation for specifying a depopulated area, selects specific records (location information of the mobile equipments 100) among the customer information extracted by the customer information extraction unit 512 using an attribute of the attribute information as a key and thereby extracts the customer information. In other words, it is a part that sorts out the mobile equipments 100 that match the attribute (for example, age, gender or the like) of the attribute information designated by an operator. Note that the customer attribute classification unit 513 is not an essential element. Thus, when there is no need to perform sorting based on an attribute, all of the mobile equipments 100 serve as a target without using the customer attribute classification unit 513.

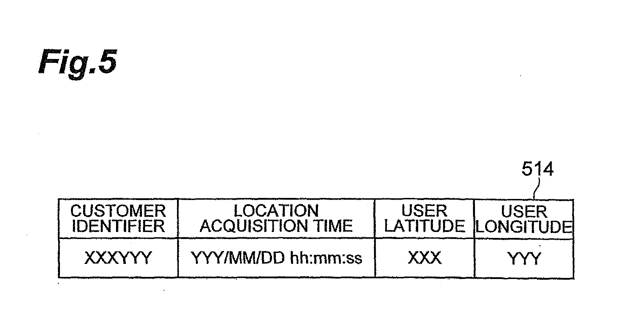

The GPS information accumulation unit 514 is a part that accumulates a GPS information management table containing GPS information of the mobile equipments 00. Fig. 5 is an explanatory diagram of the GPS information management table that contains GPS information including location information. As shown in Fig. 5, the GPS information management table contains customer identifier, location acquisition time and location information (user latitude and user longitude) in association with one another. The GPS information is collected by a GPS information collection unit 519 and accumulated as described below.

The GPS information collection unit 519 (collection means) is described hereinbelow. Although the GPS information collection unit 519 is included in the social sensor unit 501, it may be included in the mobile demography unit 503. The GPS information collection unit 519 collects the location information of each of the mobile equipments 100 transmitted from each of the mobile equipments 100. The GPS information collection unit 519 accumulates the collected location information together with the location acquisition time and the customer identifier information as the GPS information into the GPS information accumulation unit 514 through the peta mining unit 502. Note that the GPS information accumulation unit 514 may be included in the peta mining unit 502 in some cases.

Further, although the GPS information collection unit 519 collects the location information from each of the mobile equipments 100 as the GPS information, the location information is not necessarily collected by GPS. For example, it may be rough location information that is acquired by PRACH-PD positioning method. In this case, the GPS information collection unit 519 functions as a location information acquisition unit, and the location information acquisition unit acquires the location information from the RNC or the switching equipment rather than acquiring the location information from each of the mobile equipments 100.

The GPS information extraction unit 515 is a part that extracts the GPS information of each of the mobile equipments 100 from the GPS information accumulation unit 514. The extracted GPS information is output to the depopulated area specifying unit 516.

The depopulated area specifying unit 516 is a part that specifies a depopulated area which is a part where the population density is low or there is no population in a given area (which is the sector area of influence in this embodiment). The given area in which the depopulated area specifying unit 516 specifies a depopulated area may be an area designated by an operator or a predetermined area, which may be the whole Japan area, some local area, or a prefectural area.

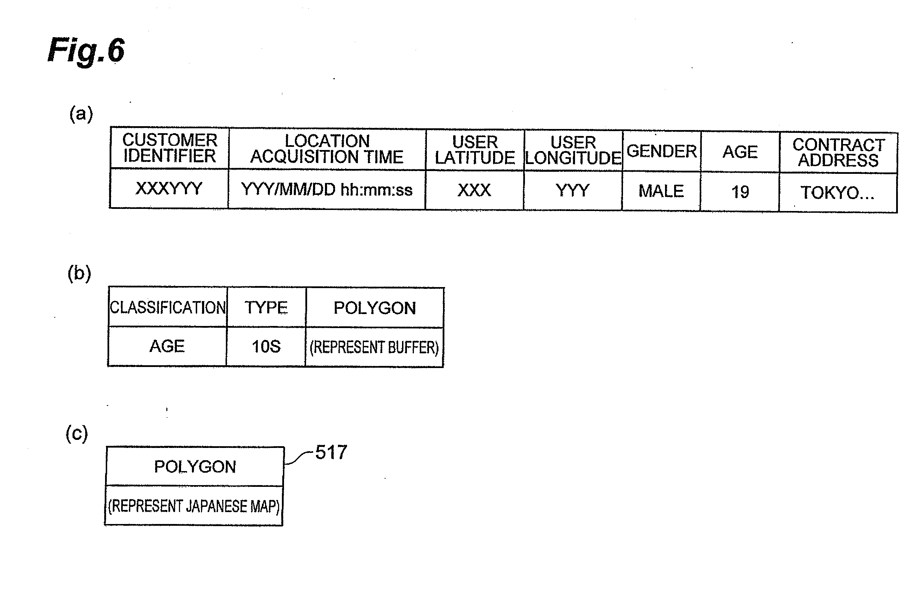

Further, a method of specifying a depopulated area in the depopulated area specifying unit 516 is specifically described below. The depopulated area specifying unit 516 first creates an intermediate table on the basis of the customer information contained in the customer information management table and the location information contained in the GPS information management table. The intermediate table is a table in which the information shown in Fig. 6(a) are associated with one another. Specifically, customer identifier, location acquisition time, user latitude, user longitude, gender, age and contract address are stored in association with one another in the intermediate table.

Then, the depopulated area specifying unit 516 extracts the location information of the mobile equipments 100 that are sorted out based on the attribute information designated by the customer attribute classification unit 513 according to the information stored in the intermediate table. The depopulated area specifying unit 516 then generates populated areas to serve as given buffer regions based on the location information of each of the mobile equipments 100. In this example, the buffer region that is defined as a circle with a given radius around the location information serves as the populated area.

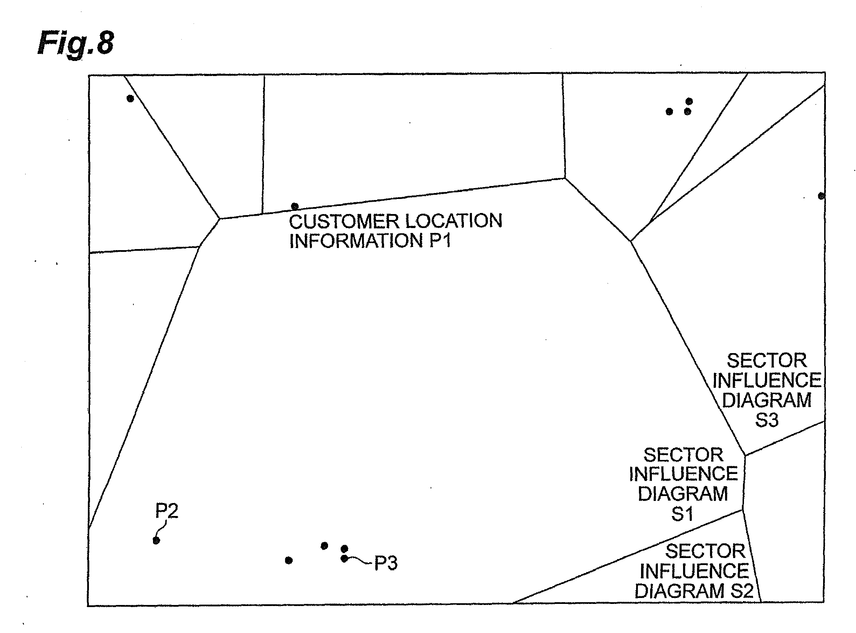

A specific example is described with reference to the drawing. Fig. 8 is an explanatory diagram showing that each area is formed by a sector influence diagram of each base station. The sector influence diagram is a representation of a range (sector area of influence) covered by each sector managed by a base station in a mobile communication network with a specific diagram. In Fig. 8, the sector area of influence is represented by a Voronoi diagram. The dots (black points) shown in Fig. 8 indicate the locations of the mobile equipments 100 (which are equivalent for customers) obtained using GPS. The depopulated area specifying unit 516 generates buffer regions which are circles with a given radius r around the dots. In Fig. 8, customer location information P1 to P3 are shown.

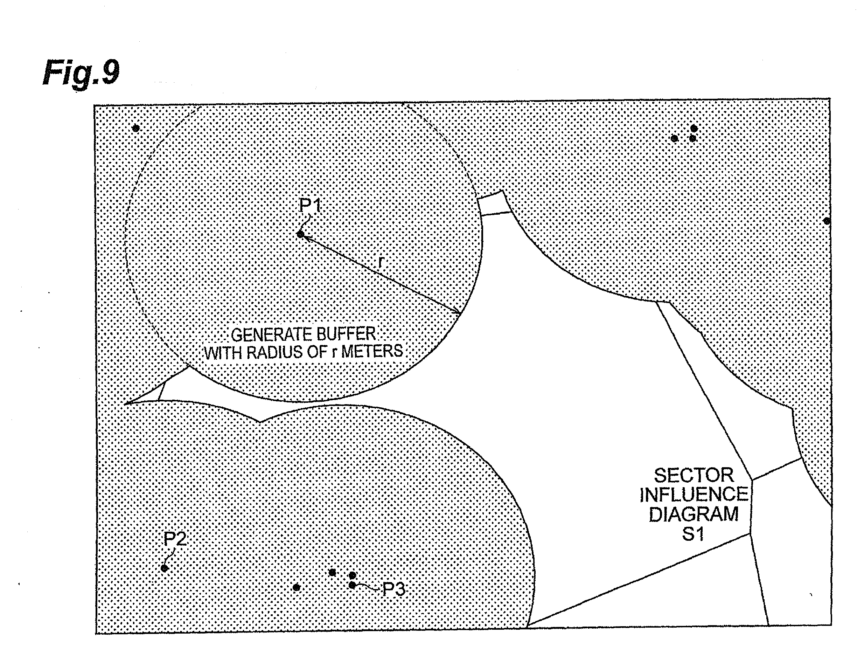

Then, the depopulated area specifying unit 516 generates one populated area by superimposing a plurality of buffer regions generated for the respective mobile equipments 100. At this point, a buffer management table shown in Fig. 6(b) is created to manage the populated area. In the buffer management table, classification method indicating a designated attribute, type which is a specific example of the classification, and polygon (binary data) indicating the buffer region are stored in association with one another as shown in Fig. 6(b). Fig. 9 is an explanatory diagram showing a state where the generated bugger regions and the sector influence diagrams are superposed on a map. As is obvious from Fig. 9, a plurality of buffer regions are generated. The depopulated area specifying unit 516 superimposes the plurality of buffer regions on top of one another and thereby transforms them to one image data. The depopulated area specifying unit 516 associates the image with the location information indicating the positional relationship with the sector influence diagrams and temporarily stores them as binary data.

Then, the depopulated area specifying unit 516 superimposes map information divided by the sector influence diagrams accumulated in the map information accumulation unit 517 and one populated area generated by combining the buffer regions on the basis of the respective location information and thereby generates a non-populated area where there is no population distribution. The depopulated area specifying unit 516 then stores the non-populated area with no population distribution, together with the location information indicating its location, into the depopulated area information storage unit 518. The location information is information by which the map information and the populated area can be superimposed on each other, and the location of the non-populated area can be specified using two location information, for example.

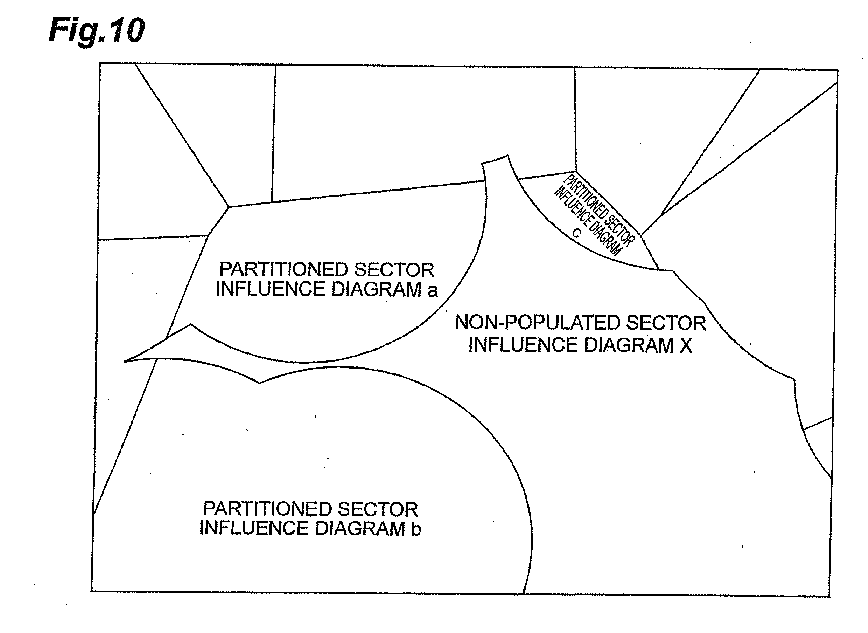

Specifically, in a given sector area of influence S1, a non-populated sector influence diagram x, which is a part that cannot be covered with the populated area, exists as shown in Fig. 10. Note that the sector influence diagram in this embodiment indicates the unit of calculation of population distribution. In this embodiment, the depopulated area specifying unit 516 determines the region that cannot be covered with the populated area as the non-populated area and stores it into the depopulated area information storage unit 518.

The map information accumulation unit 517 is a part that accumulates map information divided by the sector influence diagrams, which are areas formed by predetermined boundaries. For example, the map information accumulation unit 517 accumulates the map information of Japan by binary data as shown in Fig. 6(c). In the map information, to allow superimposition with the above-described non-populated area, the location information indicating the location of the sector influence diagram on the map is added in each sector influence diagram.

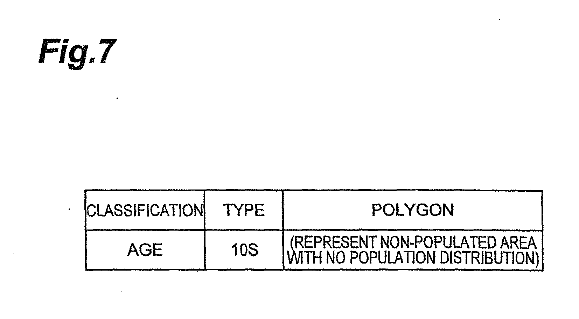

The depopulated area information storage unit 518 is a part that stores depopulated area information. Specifically, it is a part that stores a non-populated sector influence diagram x, which is the non-populated area with no population distribution that is generated by the depopulated area specifying unit 516. To be specific, the depopulated area information management table shown in Fig. 7 is stored. In the depopulated area information management table, classification method, type and binary data are stored in association with one another. The binary data contains image data indicating the shape of a region indicating the depopulated area and location information of the region in the map information. The location information is added so as to allow superimposition with the map information or the like accumulated in the map information accumulation unit 517.

Although the customer information accumulation unit 511, the GPS information accumulation unit 514, the map information accumulation unit 517 and the depopulated area information storage unit 518 are included in the management server 503a of the mobile demography unit 503 in the above-described embodiment, it is not limited thereto, and those accumulation units and storage unit may be included in the peta mining unit 502.

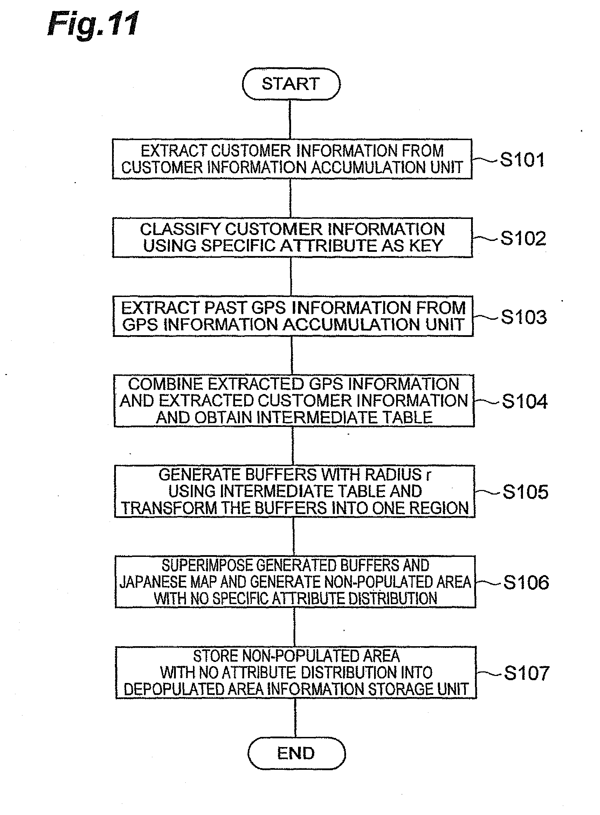

The operation of the management server 503a having the above-described configuration is described hereinbelow. Fig. 11 is a flowchart showing the operation of the management server 503a. First, the customer information extraction unit 512 extracts customer information from the customer information accumulation unit 511 (S101). Next, the customer attribute classification unit 513 classifies the customer information using an attribute indicated by the attribute information previously designated by an operator as a key (S102).

Then, the GPS information extraction unit 515 extracts the past location information of the mobile equipments 100 from the GPS information accumulation unit 514 (S103). The depopulated area specifying unit 516 then combines the extracted location information and the customer information and thereby generates the intermediate table for the attribute designated in the customer attribute classification unit 513 (S104).

Using the location information of the mobile equipments 100 associated with the attribute designated by the operator, the depopulated area specifying unit 516 generates the buffer regions with a radius of r around the location information according to the intermediate table. Then, the buffer areas generated for each of the mobile equipments 100 are transformed into one populated area (S105). The populated area is thereby generated based on the buffer regions with the designated attribute.

The generated populated area and the map information accumulated in the map information accumulation unit 517 are then superimposed on each other, and the non-populated area where there is no distribution of the mobile equipment 100 having the designated attribute is generated (S106). The generated non-populated area is stored into the depopulated area information storage unit 518 (S107). The non-populated area of the mobile equipment 100 can be thereby specified.

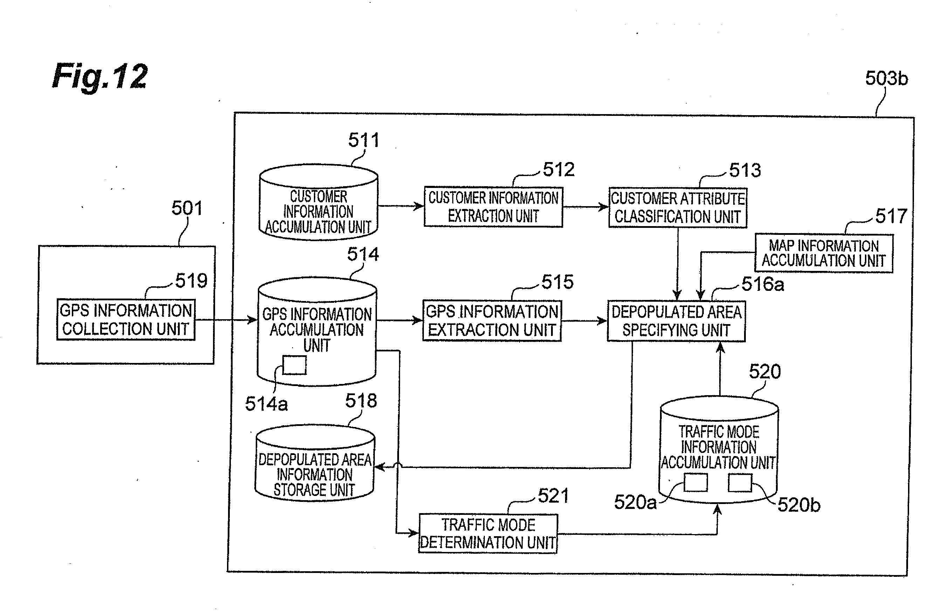

An alternative example for the method of specifying the non-populated area is described hereinbelow. Fig. 12 shows functions of a management server 503b, which is the alternative example, and it shows functions of the management server 503b that is capable of specifying the non-populated area based on traffic mode. As shown in Fig. 12, the management server 503b includes a customer information accumulation unit 511, a customer information extraction unit 512, a customer attribute classification unit 513, a GPS information accumulation unit 514, a GPS information extraction unit 515, a depopulated area specifying unit 516a, a map information accumulation unit 517, a depopulated area information storage unit 518, a GPS information collection unit 519, a traffic mode information accumulation unit 520, and a traffic mode determination unit 521 (travel mode determination means).

The management server 503b is different from the management server 503a shown in Fig. 2 in that it includes the depopulated area specifying unit 516a, the traffic mode information accumulation unit 520 and the traffic mode determination unit 521. The difference is mainly described hereinbelow.

The depopulated area specifying unit 516a first obtains the location information of the mobile equipments 100 having a given attribute based on the mobile equipments 100 having the given attribute designated by an operator, for example, that are classified by the customer attribute classification unit 513 and the location information of the mobile equipments 100 that are extracted by the GPS information extraction unit 515. Next, the depopulated area specifying unit 516a determines a radius r1 for forming a buffer region according to traffic mode accumulated in the traffic mode information accumulation unit 520 and generates a buffer region using the determined radius r1 based on the location information of the mobile equipments 100. The depopulated area specifying unit 516a then superimposes the generated buffer regions and thereby generates one populated area.

For example, when the traffic mode of "walk" is accumulated in the traffic mode information accumulation unit 520, the depopulated area specifying unit 516a determines the radius r1 as 500 m and generates a buffer region using the radius r1. When the traffic mode of "riding" (car or the like) is accumulated, the depopulated area specifying unit 516a determines the radius r1 as 1 km and generates a buffer region using the radius r1. In other words, when the traffic mode with a high travel speed (such as car, for example) is set, the radius r1 is set larger than that of the traffic mode with a low travel speed such as walk.

Then, the depopulated area specifying unit 516a superimposes the generated one populated area with the map information and generates a non-populated area where there is no population distribution. Then, the depopulated area specifying unit 516a stores the non-populated area with no population distribution, together with the location information indicating its location, into the depopulated area information storage unit 518. The location information is information that allows superimposition onto the map, and the location of the non-populated area can be specified using at least two location points.

The traffic mode information accumulation unit 520 is a part that accumulates traffic mode information. The traffic mode information stored in the traffic mode information accumulation unit 520 is accumulated based on the result determined by the traffic mode determination unit 521.

The traffic mode determination unit 521 is a part that obtains the travel speed of each of the mobile equipments 100 based on the location information of the mobile equipments 100 accumulated in the GPS information accumulation unit 514 and determines the traffic mode according to the travel speed. For example, the traffic mode determination unit 521 derives a point data table 520a from a location information data table 514a that is accumulated in the GPS information accumulation unit 514 and accumulates it into the traffic mode information accumulation unit 520.

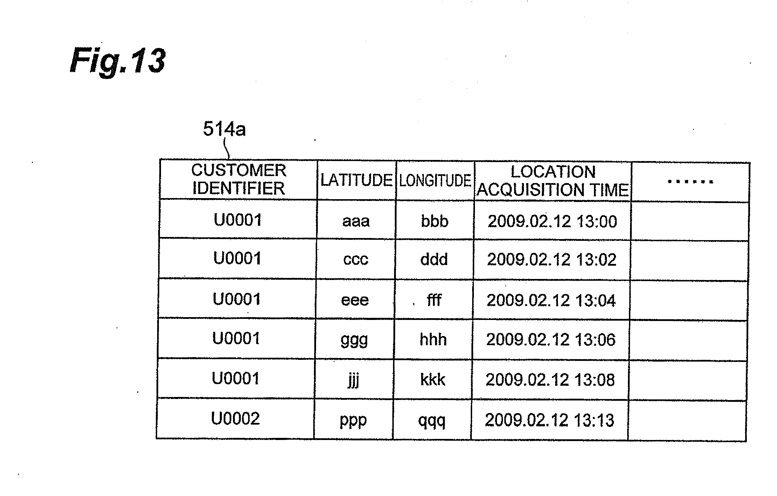

Fig. 13 is an explanatory diagram showing a specific example of the location information data table 514a. As shown in Fig. 13, in the location information data table 514a, customer identifier indicating the mobile equipment 100, latitude and longitude, which are the location information of the same, and location acquisition time, which is the measured time, are stored in association with one another.

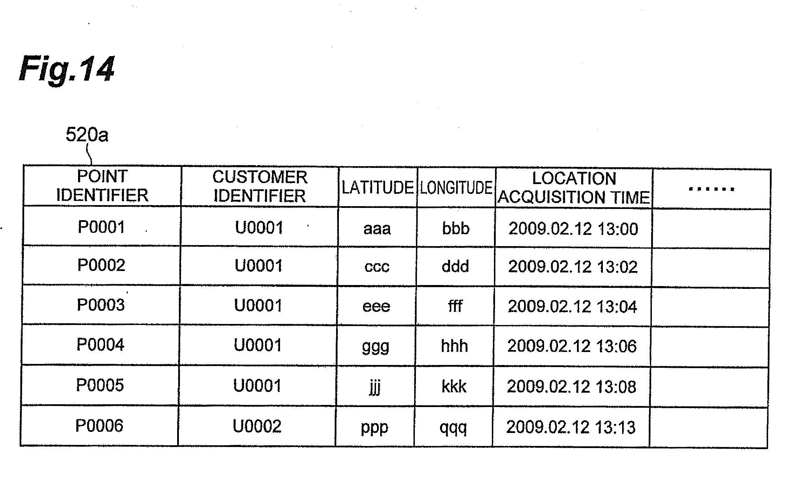

The traffic mode determination unit 521 creates the point data table 520a on the basis of the location information data table 514a. Fig. 14 is an explanatory diagram showing a specific example of the point data table 520a. The point data table 520a is information that are arranged in time series according to the location information acquisition time with respect to each customer identifier contained in the location information data table 514a, in which a unique identifier, namely, a point identifier, is assigned to each of the locations.

The traffic mode determination unit 521 creates a line data table 520b in accordance with the point data table 520a. The line data table 520b is information in which travel method, starting point identifier and end point identifier are associated with one another with respect to each line identifier. A procedure to create the line data table 520b is as follows.

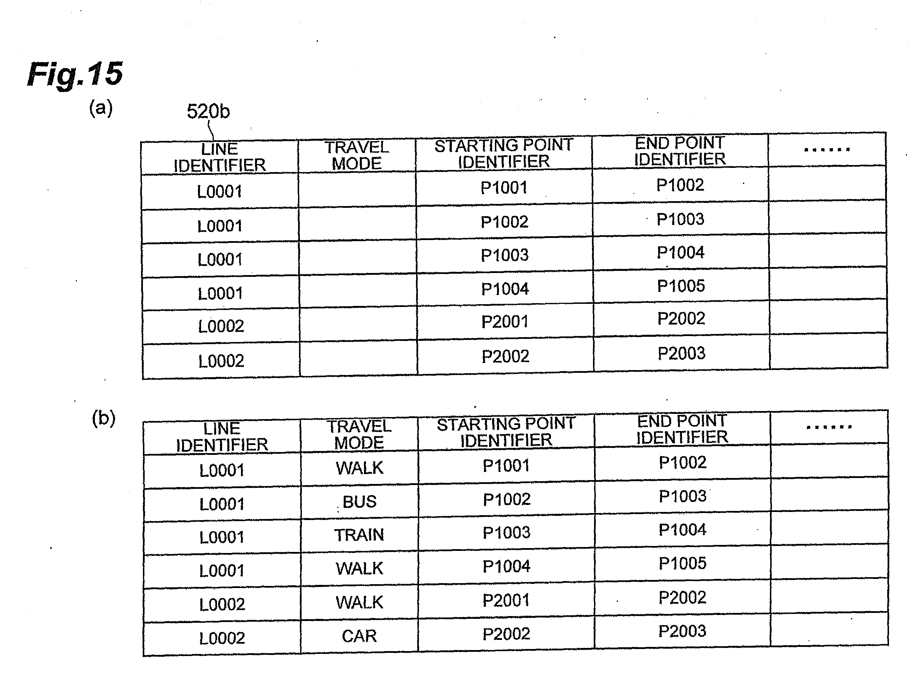

The traffic mode determination unit 521 extracts point identifiers one by one from the top of the point identifiers that are arranged in time series (in the order from old to new) in the point data table 520a. The traffic mode determination unit 521 sets the extracted point identifier as the starting point identifier and sets the point identifier arranged subsequent to the extracted point identifier as the end point identifier, assigns a line identifier, and writes them into the line data table 520b. This is repeated until the point identifier ceases to exist or reaches a predetermined number, thereby creating the line data table 520b. The travel method is not yet written at this time (see Fig. 15(a)).

Then, to set the travel method for each line identifier, a travel speed is obtained from the location information of the starting point identifier and the location information of the end point identifier respectively associated with the line identifier and the location acquisition time of the same, and a travel method predetermined according to the speed is set and written to the line data table 520b (see Fig. 15(b)). Note that the travel method may be set based on whether it is on the route of a bus, train or the like on the basis of route information of the map information, not only on the speed.

Although the above-described traffic mode information accumulation unit 520 is included in the mobile demography unit 503, it is not limited thereto, and it may be included in the peta mining unit 502.

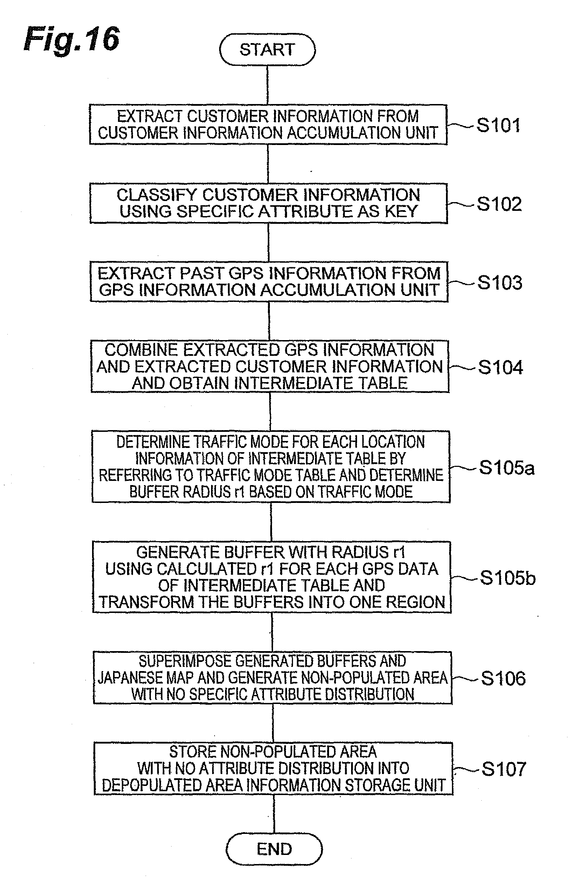

The operation of the management server 503a having the above-described configuration is described hereinbelow. Fig. 16 is a flowchart showing the operation of the management server 503a according to the alternative example. S101 to S104 are the same as those of the process shown in Fig. 11, and the intermediate table is created by extracting and classifying the customer information, extracting the location information of the mobile equipments 100, and combining those information (S101 to S104).

The depopulated area specifying unit 516a determines the traffic mode according to the travel method contained in the line data table 520b accumulated in the traffic mode information accumulation unit 520, and determines the radius r1 corresponding to the traffic mode (S105a).

Then, the depopulated area specifying unit 516a generates buffer regions based on the radius r1 determined in S105a around the location information contained in the intermediate table, obtains the depopulated area information based thereon, and then accumulates the information (S106 to S107).

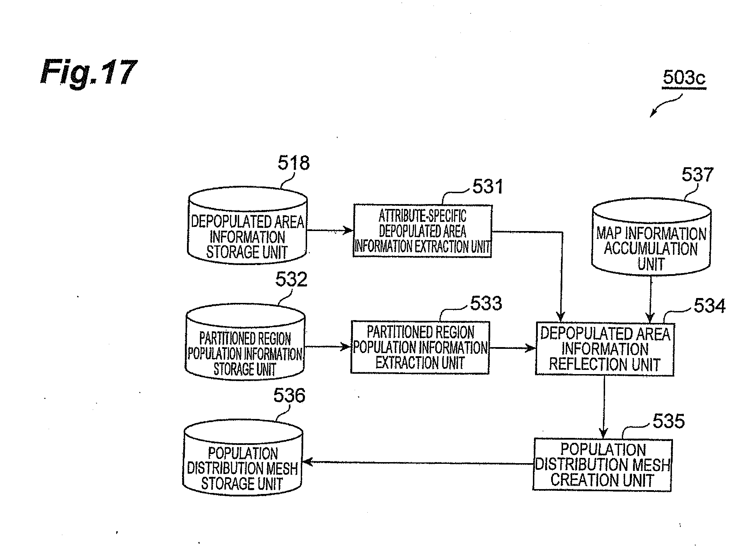

An aspect of use of the depopulated area information obtained by the above-described process is described hereinafter. Fig. 17 is a block diagram showing functions of a management server 503c for calculating accurate population distribution using the depopulated area information. The management server 503c is a device that is included as one function of the mobile demography unit 503. The management server 503c is also a computer system composed of a CPU, ROM, RAM and the like as shown in Fig. 3, and various functions are executed by the CPU.

The management server 503c (population information calculation management server) includes a depopulated area information storage unit 518, an attribute-specific depopulated area information extraction unit 531, a partitioned region population information storage unit 532 (population information storage means), a partitioned region population information extraction unit 533, a depopulated area information reflection unit 534 (populated area specifying means), a population distribution mesh creation unit 535 (population information calculation means), a population distribution mesh storage unit 536, and a map information accumulation unit 537 (area storage means). Each element is described hereinbelow.

The depopulated area information storage unit 518 is a part that stores the depopulated area information generated in the management server 503a or the management server 503b. The depopulated area information is configured for each attribute, and it is configured based on the population distribution classified by gender, age or the like, for example.

The attribute-specific depopulated area information extraction unit 531 is a part that extracts the depopulated area information for each attribute from the depopulated area information storage unit 518, and it can extract the depopulated area information according to the attribute classified by gender, age or the like, for example. The attribute-specific depopulated area information extraction unit 531 extracts the depopulated area information where no male exists, for example, according to an instruction of an operator of the management server 503c.

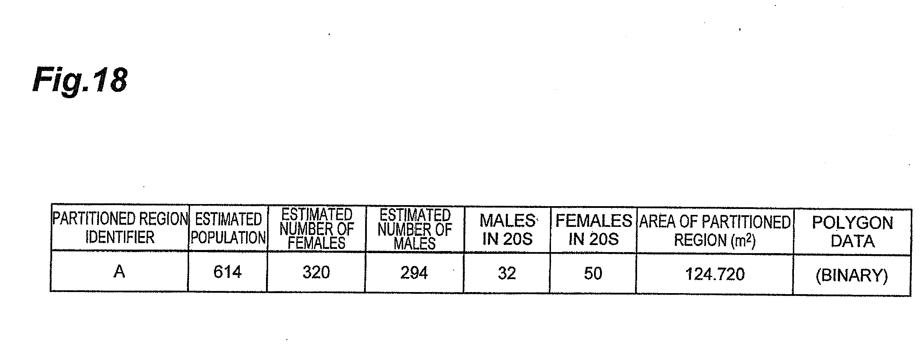

The partitioned region population information storage unit 532 is a part that stores the partitioned region population information. The partitioned region population information is population information or estimated population in the sector influence diagram (partitioned region) defined for each sector of a base station. Fig. 18 is shows a specific example of the partitioned region population information stored in the partitioned region population information storage unit 532. As is obvious from Fig. 18, partitioned region identifier, estimated population, estimated number of females, estimated number of males, number of males in their twenties, number of females in their twenties, area of partitioned area, and polygon data are stored in association with one another as the partitioned region population information. The polygon data is binary data, and it contains image data indicating the shape of the sector influence diagram and the location information on the map. The partitioned region population information is numerical information which is an aggregation of the number of cellular phones in the area, contract information and the like for each sector. The estimation of population and the estimation of attribute distribution on a sector basis can be thereby performed. Note that the estimated population is not limited thereto, and it may be information obtained by GPS information or the like or information obtained based on census results, for example.

The partitioned region population information extraction unit 533 is a part that extracts the partitioned region population information stored in the partitioned region population information storage unit 532. According to an instruction by an operator of the management server 503c (which is the same as the instruction received by the attribute-specific depopulated area information extraction unit 531), the partitioned region population information extraction unit 533 extracts the partitioned region population information corresponding to the instruction.

The depopulated area information reflection unit 534 is a part that calculates population information in a given sector influence diagram from which the region indicated by the attribute-specific depopulated area information is removed based on the attribute-specific depopulated area information extracted by the attribute-specific depopulated area information extraction unit 531 and the partitioned region population information extracted by the partitioned region population information extraction unit 533. Specifically, the depopulated area information reflection unit 534 acquires the depopulated area information with a specific attribute (for example, male) only, removes the non-populated area indicated by the acquired depopulated area information from the sector influence diagram and thereby creates partitioned sector influence diagrams, and calculates population information in the partitioned sector influence diagram based on the area ratio of the partitioned sector influence diagrams and the sector influence diagram (the whole sector influence diagram before removal) and the partitioned region population information of the sector influence diagram. Note that the sector influence diagram where the removal is done may be designated by an operator, or it may be all sector influence diagrams, or a predetermined sector influence diagram.

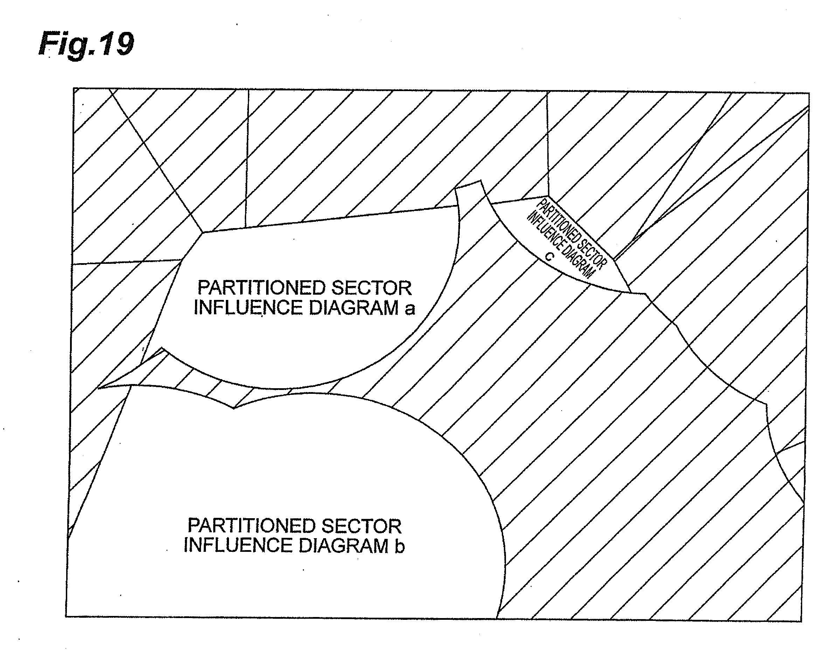

Fig. 19 is an explanatory diagram showing the partitioned sector influence diagrams extracted based on the depopulated area information. As shown in Fig. 19, when the region indicated by the depopulated area information is removed from a given sector influence diagram, partitioned sector influence diagrams a to c are obtained as the partitioned sector influence diagram. The depopulated area information reflection unit 534 calculates the population information of each of the partitioned sector influence diagrams a to c based on the area ratio of the partitioned sector influence diagrams a to c and the whole sector influence diagram in which the partitioned sector influence diagrams a to c are included.

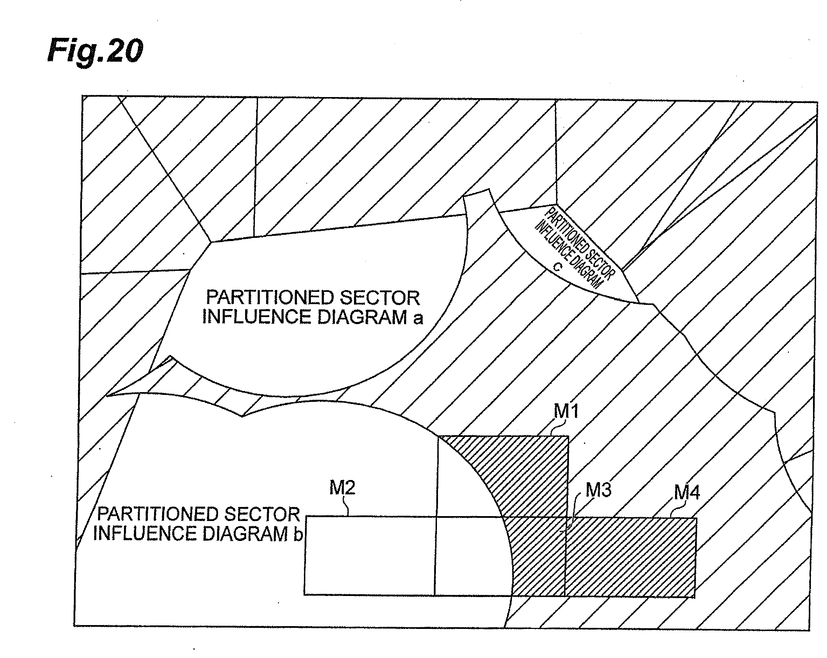

The population distribution mesh creation unit 535 is a part that calculates the population information of a mesh region in a given sector influence diagram using rectangular mesh regions. Specifically, the population distribution mesh creation unit 535 partitions the partitioned sector influence diagram shown in Fig. 19 using a mesh region. The partitioned sector influence diagram may be partitioned using a plurality of mesh regions, for example, as shown in Fig. 20. In Fig. 20, partition is made using mesh regions M1 to M4.

Then, the population distribution mesh creation unit 535 calculates the population information in each of the mesh regions M1 to M4. In each mesh region, the part that overlaps the area indicated by the depopulated area information is a part where there is no population distribution. Thus, by calculating the population information of the mesh region using the area ratio to that part, accurate population information can be calculated. For example, about three fourths of the mesh region M1 in Fig. 20 is occupied with the region indicated by the depopulated area information. Thus, the accurate population information of the mesh region M1 can be calculated by calculating the population information of the mesh region M1 based on the area ratio of the mesh region M1 and the sector influence diagram b and further calculating the population information with the depopulated area information taken into account based on the area ratio of the mesh region M1 and the part overlapping the region by the depopulated area information. Further, in the same manner, there is no region by the depopulated area information in the mesh region M2. In this case, the population information is calculated based on the area ratio of the mesh region M2 and the sector influence diagram b.

The population distribution mesh storage unit 536 is a part that stores the population information for each of the mesh regions calculated by the population distribution mesh creation unit 535.

The map information accumulation unit 537 is a part that stores map information composed of the sector influence diagrams, which are areas formed by predetermined boundaries. The location information is assigned to allow superimposition of the depopulated area information and the stored map information in order for the depopulated area information reflection unit 534 to specify the populated area.

Note that, although the depopulated area information storage unit 518, the partitioned region population information storage unit 532, the population distribution mesh storage unit 536 and the map information accumulation unit 537 are included in the mobile demography unit 503, it is not limited thereto, and they may be included in the peta mining unit 502.

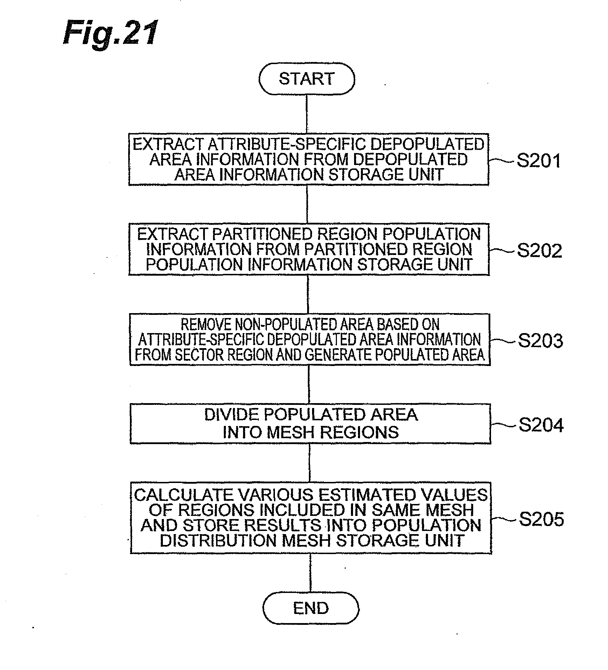

The process of the management server 503c having the above-described configuration is described hereinbelow. Fig. 21 is a flowchart showing the process of the management server 503c for calculating the population information of a given area using the depopulated area information.

The attribute-specific depopulated area information extraction unit 531 extracts the depopulated area information from the depopulated area information storage unit 518 (S201). Further, the partitioned region population information extraction unit 533 extracts the partitioned region population information from the partitioned region population information storage unit 532 (S202).

On the other hand, the population distribution mesh creation unit 535 removes the non-populated area determined based on the attribute-specific depopulated area information from a designated sector influence diagram and thereby generates a populated area (S203). The populated area is then divided by mesh regions (S204).

Then, the population distribution mesh creation unit 535 calculates the population information in each of the mesh regions based on the area ratio to the sector influence diagram and the area with the populated area. The population information of each of the mesh regions obtained by the calculation is stored into the population distribution mesh storage unit 536 (S205).

In this manner, population information can be calculated for each of the mesh regions, and because the population information can be calculated with the non-populated region in the mesh region taken into account, more accurate population information can be obtained.

The effects of the management servers 503a to 503c having the above-described configurations are described hereinbelow.

In the management server 503a according to the embodiment, the GPS information collection unit 519 collects the location information of the mobile equipments 100, and stores the location information into the GPS information accumulation unit 514. Then, the depopulated area specifying unit 516 specifies a non-populated area in a given area (for example, an area (sector influence diagram) designated by an operator) using the location information accumulated in the GPS information accumulation unit 514. The population distribution can be thereby accurately calculated using the non-populated area. For example, there can be a case where the population distribution in a given area is not uniform within the area. In such a case, it is possible to know in which part the population is unevenly distributed using the mobile equipment non-populated area. Thus, when it is desired to know the population information in an area that is further partitioned in a given area, it is possible 7to calculate the accurate population information using the mobile equipment non-populated area. In this case, when the attribute of users of the mobile equipments 100 is not used as a basis, the population information is calculated for all users as a target, and, when the attribute is used as a basis, the population information for each attribute can be calculated using the customer information accumulation unit 511, the customer information extraction unit 512 and the customer attribute classification unit 513 as described later.

Further, in the management server 503a, the map information accumulation unit 517 stores area information indicating areas formed by predetermined boundaries and the locations of the areas. Then, the depopulated area specifying unit 516 forms a populated area with a given radius r around the collected location information and removes the populated area from the area indicated by the area information stored in the map information accumulation unit 517 to thereby specify the non-populated area. It is thereby possible to calculate the accurate population information using the non-populated area in a given area.

Furthermore, in the management server 503a, the customer information accumulation unit 511 stores attribute information (age, gender and the like) of each of mobile equipments 100 (namely, customers) in advance. On the other hand, the GPS information collection unit 519 collects the location information of the mobile equipments 100 and further collects the attribute information and stores them into the GPS information accumulation unit 514. The customer attribute classification unit 513 sorts out the mobile equipments 100 having the designated attribute information from the customer information extracted from the customer information accumulation unit 511 by the customer information extraction unit 512. Then, the depopulated area specifying unit 516 can specify the non-populated area in a given area using the location information of the mobile equipments 100 having the given attribute information that have been sorted out by the customer attribute classification unit 513. It is thereby possible to specify the non-populated area with the attribute information taken into account and thereby achieve the calculation of population information in consideration of the attribute information. This is effective when it is desired to know the population distribution of males only, for example.

Further, in the management server 503b, which is an alternative example, the traffic mode determination unit 531 determines the travel mode of the mobile equipments 100 based on the location information of the mobile equipments 100 collected by the GPS information collection unit 519. Then, the depopulated area specifying unit 516a can specify the non-populated area in a given area according to the travel mode determined by the traffic mode determination unit 531 and the location information of each of the mobile equipments 100 collected by the GPS information collection unit 519.

Specifically, the travel mode of each of the mobile equipments 100 is stored in the traffic mode information accumulation unit 530, and the GPS information accumulation unit 514 stores the location information as the GPS information. Then, the depopulated area specifying unit 516a can specify the non-populated area in a given area according to those stored information. It is thereby possible to specify the non-populated area according to the travel mode, which can be used for the calculation of more accurate population information.

In the management server 503c (population information calculation management server) using the depopulated area specified in the above-described management server 503a or 503b, the attribute-specific depopulated area information extraction unit 531 extracts the depopulated area information designated by an operator from the depopulated area information storage unit 518. On the other hand, the partitioned region population information extraction unit 533 extracts the partitioned region population information related to the partitioned region designated by an operator from the partitioned region population information storage unit 532. Then, the depopulated area information reflection unit 534 is a part that calculates the population information in a given sector influence diagram from which the region indicated by the attribute-specific depopulated area information is removed. The population information is calculated based on the area ratio.

On the other hand, the map information accumulation unit 537 stores the map information composed of the sector influence diagrams, which are area information indicating areas formed by predetermined boundaries and the locations of the areas, and the partitioned region population information storage unit 532 stores the population information indicating the population located in the area for each of the areas. For example, the area is a sector, and the estimated population aggregated for each sector is stored as the population information. Then, the depopulated area information reflection unit 534 removes the non-populated area specified by the attribute-specific depopulated area information extraction unit 531 from the area stored in the map information accumulation unit 537 and thereby specifies the populated area where a population exists. Then, the population distribution mesh creation unit 535 can calculate the population of the populated area or a partial area in the populated area based on the populated area specified by the depopulated area information reflection unit 534 and the population information for each area stored in the partitioned region population information storage unit 532.

Specifically, the population distribution mesh creation unit 535 partitions a given area using rectangular mesh regions for further partition into smaller pieces. The population can be then calculated for each of the mesh regions based on the area ratio with the non-populated area. For example, when the non-populated area occupies half of the mesh region, the area ratio of the mesh region to the whole area is calculated, and the area ratio of the non-populated area is further calculated, and this area ratio is used for the calculation of population information. It is thereby possible to calculate the accurate population information. Although the presence or absence of a mobile equipment has not been recognizable by the non-populated area, the populated area or the like in a given area, the non-populated area and the populated area are recognizable in this invention, and it is thus possible to calculate the accurate population information when calculating the population information in a mesh region further divided from a given area.

### Reference Signs List

10...Communication system, 100...Mobile equipment, 200...BTS, 300...RNC, 400...Switching equipment, 500...Control center, 501...Social sensor unit, 502...Peta mining unit, 503...Mobile demography unit, 503a...Management server, 503b...Management server, 503c...Management server, 504...Visualization solution unit, 511...Customer information accumulation unit, 512...Customer information extraction unit, 513...Customer attribute classification unit, 514...GPS information accumulation unit, 514a...Location information data table, 515...GPS information extraction unit, 516...Depopulated area specifying unit, 516a...Depopulated area specifying unit, 517...Map information accumulation unit, 518...Depopulated area information storage unit, 519...GPS information collection unit, 520...Traffic mode information accumulation unit, 520a...Point data table, 520b...Line data table, 521...Traffic mode determination unit, 531...Attribute-specific depopulated area information extraction unit, 532...Partitioned region population information storage unit, 533...Partitioned region population information extraction unit, 534...Depopulated area information reflection unit, 535...Population distribution mesh creation unit, 536...Population distribution mesh storage unit, 537...Map information accumulation unit

## Claims

1. A management server comprising:
a collection means for collecting location information of mobile equipments; and
a non-populated area specifying means for specifying a non-populated area in a given area according to the location information collected by the collection means.

2. The management server according to Claim 1, further comprising:
an area storage means for storing area information indicating areas formed by predetermined boundaries and locations of the areas, wherein
the non-populated area specifying means specifies the non-populated area by forming a populated area with a given radius around the location information collected by the collection means and removing the populated area from the area indicated by the area information stored in the area storage means.

3. The management server according to Claim 1 or 2, further comprising:
an attribute information storage means for storing attribute information of each of mobile equipments, wherein
the collection means collects the location information of mobile equipments and further collects the attribute information of the mobile equipments, and
the non-populated area specifying means sorts out mobile equipments having given attribute information based on the attribute information collected by the collection means and the attribute information stored in the attribute information storage means and specifies the non-populated area in the given area according to the location information of the sorted-out mobile equipments.

4. The management server according to any one of Claims 1 to 3, further comprising:
a travel mode determination means for determining travel mode of mobile equipments based on the location information of the mobile equipments collected by the collection means, wherein
the non-populated area specifying means specifies the non-populated area in the given area according to the travel mode determined by the travel mode determination means and the location information of each of the mobile equipments collected by the collection means.

5. A population information calculation management server comprising:
an area storage means for storing area information indicating areas formed by predetermined boundaries and locations of the areas;
a population information storage means for storing population information indicating a population located in an area for each of the areas;
a populated area specifying means for removing the non-populated area specified in the management server according to any one of Claims 1 to 4 from the area stored in the area storage means and specifying a populated area where a population exists; and
a population information calculation means for calculating a population of the populated area or a partial area in the populated area based on the populated area specified by the populated area specifying means and the population information for each of the areas stored in the population information storage means.

6. The population information calculation management server according to Claim 5, wherein
the population information storage means stores the population information collected for each of sectors defined as the areas with respect to each of the sectors.

7. A non-populated area management method comprising:
a collection step of collecting location information of mobile equipments; and
a non-populated area specifying step of specifying a non-populated area in a given area according to the location information collected in the collection step.

8. A population information calculation method in a management server including an area storage means for storing area information indicating areas formed by predetermined boundaries and locations of the areas, and a population information storage means for storing population information indicating a population located in an area for each of the areas, the method comprising:
a populated area specifying step of removing the non-populated area specified in the management server according to any one of Claims 1 to 4 from the area stored in the area storage means and specifying a populated area where a population exists; and
a population information calculation step of calculating a population of the populated area or a partial area in the populated area based on the populated area specified in the populated area specifying step and the population information for each of the areas stored in the population information storage means.
